# EUROPEAN PATENT SPECIFICATION

(11) **EP 0 843 580 B1**
(45) Date of publication and mention of the grant of the patent: **04.10.2000**
(21) Application number: 95916831.1
(22) Date of filing: 10.04.1995
(51) Int. Cl.: A63B 23/03, A61C 7/00

(54) **DENTAL APPARATUS**
DENTALGERÄT
APPAREIL DENTAIRE

(30) Priority: 12.04.1994 IT TO940071 U
(43) Date of publication of application: 27.05.1998
(73) Proprietor: Scenna, Sandro, 15100 Alessandria (IT); Rovere, Giancarlo, I-15100 Alessandria (IT)
(72) Inventor: Scenna, Sandro, 15100 Alessandria (IT); Rovere, Giancarlo, I-15100 Alessandria (IT)
(74) Representative: Jorio, Paolo, Dr. Ing.
(86) International application number: IT9500051
(87) International publication number: WO9527536

(56) References cited:
- US-A- 3 488 848
- US-A- 4 185 817
- US-A- 4 211 008
- US-A- 4 797 093

## Description

### TECHNICAL FIELD

The present invention relates to dental apparatus which can be positioned within an oral cavity of a patient between the patient's dental arches.

### BACKGROUND ART

For diagnosis and/or treatment of various types of ailments such as, for example, headache due to muscular tension, facial pain and/or neck pain, difficulty in movement of jaw muscles, and to correct the stresses relating to the mastication muscles and/or to reduce the pain due to differences in the occlusion pressures along the upper and lower dental arches of a patien, it is known from US patent 3488848 to provide oral apparatus which can be inserted into the patient's oral cavity and comprising two relatively deformable occlusal portions which can be clamped, in use, between the patient's dental arches, and which are connected together by a bridge element. Each occlusal portion is defined by a hollow body defining a chamber containing within it a liquid. As described in US patent 4211008 each of the said chambers is connected to the other chamber by means of a duct or conduit which is formed within the said bridge element and which cooperates with the chambers to define a closed circuit for the liquid.

The dignostic and therapeutic effects of the known apparatus of the above described type are exclusively attributed to the adaptability of the said occlusal portions following occlusion of the patient. In order to maintain this effectiveness unchanged following prolonged use of the apparatus it is essential to adopt specific arrangements, both constructional and in choice of materials, to prevent the escape of liquid from the chambers during use.

### DISCLOSURE OF INVENTION

The object of the present invention is that of providing dental apparatus which makes it possible to resolve the above explained problems, and which at the same time can be made simply and economically.

According to the present invention there is provided dental apparatus which can be fitted within a patient's oral cavity and which comprises two terminal cushion elements which can be clamped between the patient's teeth, and connection means to connect the cushion elements together, characterised in that each said terminal cushion element is defined by a solid resilient body delimited laterally by a pair of contact surfaces which can come into contact with the patient's teeth; the said connection means comprising a wire element made of material which can be cold formed.

Preferably the above-defined apparatus further includes an intermediate cushion element extending between the said terminal cushion elements and defined by at least one further resilient body delimited laterally by a pair of contact surfaces which can come into contact with at least part of the incisor teeth of the patient; the said further resilient body being coupled to the said wire element.

### BRIEF DESCRIPTION OF THE DRAWINGS

The invention will now be described with reference to the attached drawings which illustrate several non-limitative embodiments thereof in which:
Figure 1 is a perspective view of a first preferred embodiment of the dental apparatus according to the present invention;
Figure 2 illustrates, in section taken on the line II - II of Figure 1, four different ways of forming a detail of Figure 1;
Figure 3 illustrates, also in section taken on the line II - II of Figure 1, five variants of the detail of Figure 2,
Figure 4 illustrates, in section taken on the line IV - IV of Figure 1, four different ways of forming two details of the apparatus of Figure 1;
Figure 5 illustrates, in plan, three different embodiments of a detail of Figure 1;
Figure 6 illustrates, in plan view, the apparatus of Figure 1 and three different variants of some details of the apparatus;
Figure 7 is a perspective view of a second preferred embodiment of the apparatus according to the present invention;
Figure 8 illustrates, in plan view, five different practical embodiments of a detail of Figure 7; and
Figure 9 illustrates, in section taken on the line IX - IX of Figure 7, five different embodiments of a detail of Figure 1.

### BEST MODE FOR CARRYING OUT THE INVENTION

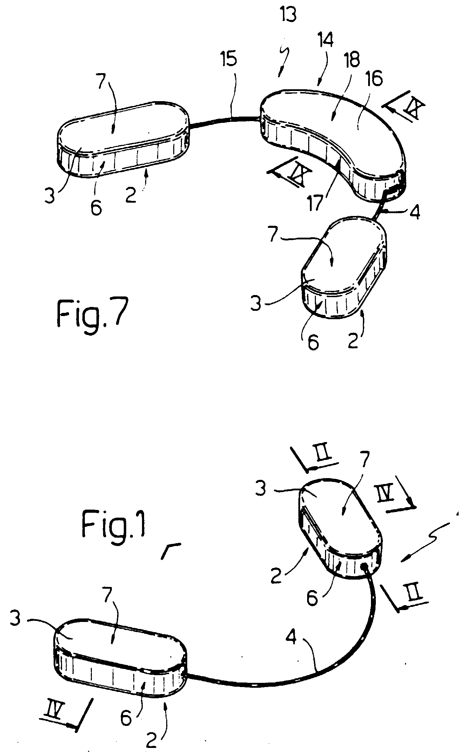

In Figure 1 the reference numeral 1 indicates dental apparatus which can be fitted into the interior of an oral cavity (not illustrated) of a patient between the patient's dental arches (not illustrated).

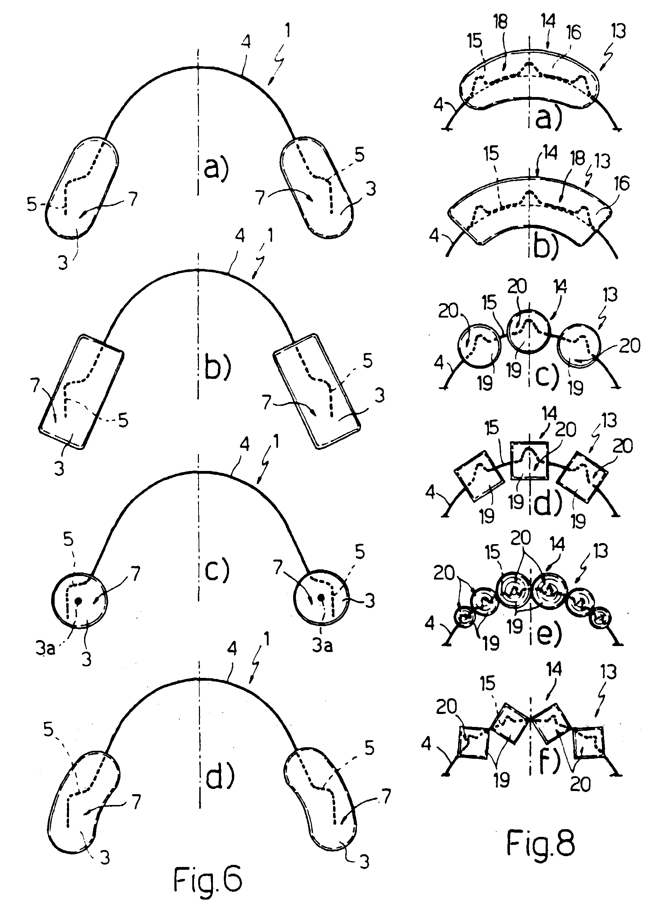

The apparatus 1 comprises a pair of terminal cushion elements 2 (Figure 6A) which in the particular example described are defined by respective generally oblong solid bodies 3 of generally rectangular form, connected together by means of a cold-formable connection element defined by a biocompatible wire 4, preferably metal and of the type utilised in the field of dentistry. The wire 4 has respective terminal sections 5 embedded in the bodies 3, which in turn have various longitudinal dimensions so as to allow them to be fitted, in use, between the premolar and molar teeth (not illustrated) of the patient's dental arches or, alternatively, solely between the molar teeth (not illustrated) of the patient's dental arches.

The bodies 3 are both made of biocompatible resilient material, preferably elastomeric material or, alternatively, by means of thermoplastic and/or thermosetting resins. Alternatively, however, the bodies 3 are made of a resilient material derived from a combination of the said resins with an elastomeric material. In all cases the bodies 3 have a high elasticity under load and, in particular, an elasticity such that following compression imparted by the patient's teeth they return to their undeformed condition without substantial residual plastic deformation.

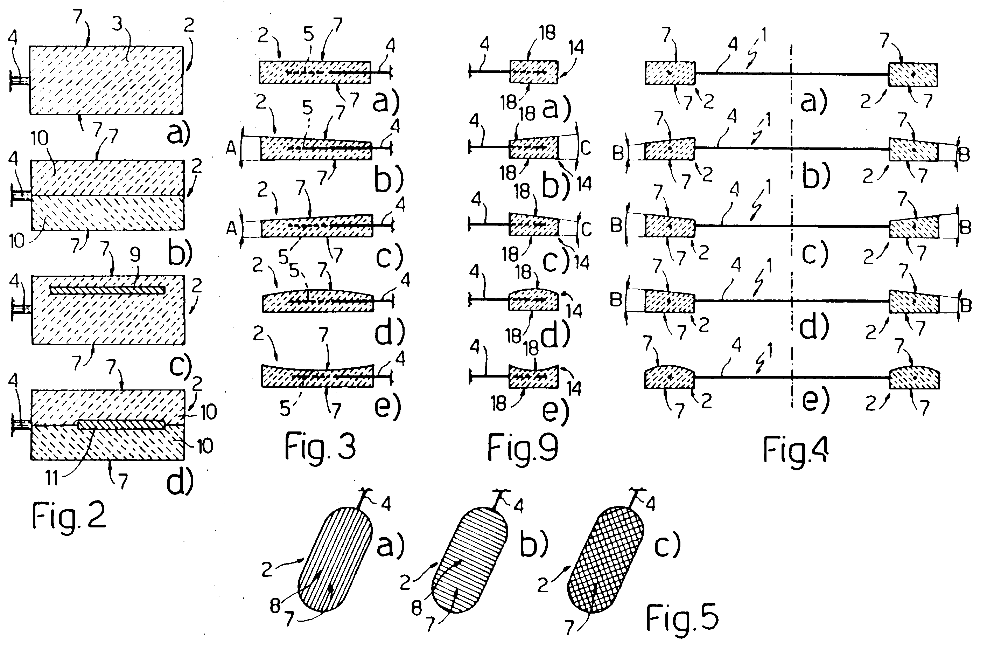

Still with reference to the particular example described, the bodies 3 are delimited by a lateral wall 6 and by two facial or contact walls 7 joined to the lateral walls 6 by rounded corners. The facial walls 7 are substantially parallel to one another and have a substantially rectangular shape and respective sides slightly curved with an outwardly facing convexity (Figures 1 and 6A) and are adapted, in use, to come into contact with the teeth (not illustrated) of the patient. Again, in the particular example described, the surfaces 7 are smooth; alternatively, however, as illustrated in Figure 5, they can have grooves or channels 8 extending parallel to or orthogonally of the major sides of the surfaces 7 (Figures 5A, 5B) or, again, can have milled surfaces as illustrated in Figure 5C.

With reference to Figures 3 and 4, one of the surfaces 7 is a convexly curved surface (Figures 3D and 4E) or a concave surface (Figure 3E); alternatively, in a variant not illustrated, both the surfaces 7 are curved surfaces having the same or different concavity from one another.

With reference however to Figures 3B and 3C, bodies 3 each have a substantially trunco-pyramid form, and the respective contact surfaces 7 are inclined with respect to one another in such a way as to form between them a non-zero angle A; in particular the surfaces 7 can be inclined with respect to one another and converge towards an intermediate portion of the wire 4 as illustrated in Figure 3B or, alternatively, on the opposite side of the wire 4 (Figure 3C) towards a free end of the associated body 3.

Alternatively, as illustrated in Figures 4B, 4C and 4D, the surfaces 7 of the same body 3 form between them an angle B and are convergent towards the other body 3 (Figure 4C) or are convergent towards the outside (Figure 4B) in such a way that the bodies 3 have respective larger ends facing one another. With reference, however, to Figure 4D, the surfaces 7 of the bodies again form an angle B with respect to one another, but the bodies 3 are connected to the wire 4 in such a way that the larger end of one of the bodies 3 is adjacent the smaller end of the other of the bodies 3.

In a variant illustrated in Figure 2C, the interior of each body 3 has an elastic plate 9 embedded in it, which is preferably made of metal or, alternatively relatively rigid plastics material. In the variant illustrated in Figure 2B, however, each body 3 includes two portions 10 which in the particular case are of the same dimensions as one another and are connected to one another, for example via an adhesive material (not illustrated), or, alternatively, by heat welding. With reference to the further variant illustrated in Figure 2D, within one of the portions 10 or between the portions 10 is embedded a relatively rigid plate 11, for example like the plate 9.

The bodies 3, as well as being shaped in the manner described above, can have different forms as illustrated in Figure 6 In particular, each body 3 can have a regular parallelepiped form on a rectangular base (Figure 6B) or, alternatively, a kidney shape (Figure 6D) or cylindrical shape (Figure 6C). In this latter case the cylindrical bodies 3 have respective axes 3A parallel to one another and substantially orthogonal to a plane in which the wire 4 lies; in a variant not illustrated the axes 3A of the cylindrical bodies extend in a direction substantially parallel to the said plane in which the wire 4 lies or, alternatively, form with this plane a predetermined non-zero angle.

The embodiment illustrated in Figure 7 relates to dental apparatus 13 similar to the apparatus 1 and in which component parts are distinguished where possible with the same reference numerals as the corresponding parts in the apparatus 1.

The apparatus 13 includes a further intermediate element 14 which is coupled in a releasable manner to an intermediate section 15 of the wire 4 lying between the two terminal elements 2 and, in the particular example described, is defined by a single prismatic body 16 (Figures 7, 8A, 8B) conveniently made of the same material as the bodies 3 and in the various different ways described for the production of the bodies 3. The body 16 can, in use, come into contact with the patient's incisor teeth (not illustrated) and it is also delimited by a lateral surface 17 and a pair of contact surfaces 18 which can be smooth or alternatively grooved or milled like the surfaces 7 of the bodies 3. With reference to Figure 9, the surfaces 18, like the surfaces 7, form between them a non-zero angle 7 and alternatively one of the surfaces 18 can be a convexly curved surface (Figure 9D) or concavely curved surface (Figure 9E). In a variant not illustrated both surfaces 18 are concavely curved or, alternatively convexly curved.

In the particular example illustrated in Figures 7 and 8A, the body 16 has the form of a circular sector, the smaller sides of which are curved with their convexity facing outwardly, and the corners of which are rounded. Alternatively, as illustrated in Figure 8B, the said smaller sides are rectilinear and extend in respective substantially radial directions.

According to the variants illustrated in Figure 8 the intermediate element 14 comprises a plurality of bodies 19 each of which has respective contact surfaces 20 which are disposed adjacent one another and are formed of the same material as that of the body 16. In particular, with reference to Figure 8C, the bodies 19 are cylindrical bodies having the same dimensions as one another and respective axes substantially orthogonal to the plane in which the wire 4 lies. Alternatively, with reference to Figure 8E, the cylindrical bodies 19 are positioned side by side and have different diameters from one another.

In a further variant illustrated in Figure 8D the bodies 19 have a regular parallelepiped form and respective quadrilateral contact surfaces 20, in the specific case square, and are disposed with their sides (Figure 8D) or alternatively with their corners (Figure 8F) adjacent one another.

In use the apparatus 1 and 13 described is first of all adapted to the dental arches (not illustrated) of the patient by cold shaping the wire 4 after which they are fitted between the dental arches by disposing the elements 2 and the element 4 when present between the corresponding teeth.

At this point the elements 2, 14 are clamped between the teeth and are either maintained in this position for a determined time or are squeezed by respective teeth with a predetermined pressure and frequency which depends on the ailment complained of by the patient or the therapy to which the patient is to be subjected in modifying the relative position of the dental arches. In this way the apparatus 1 and 13 allows diagnosis and treatment of different types of ailments such as, for example, pathological occlusal pain, toothache of any cause, pathological pains in temperomandibular articulation, noises in the temperomandibular articulation itself reduced opening of the jaw, pain in the above mentioned articulation of muscular origin, disorders of swallowing and phonation, therapy of the orthodontic second class and false third class, headache of any origin, stiff neck of any origin, cervical pain and cervicobrachial pain, back pain, lumbar pain, sciatic pain, sea sickness, vertigo, brady acusia, problems of ocular accommodation and convergence, to rotate the shoulder gurdle or the pelvic girdle both for aesthetic purposes and for differential diagnosis in the occlusal-postural relationship and relative therapeutic indications.

Moreover, the apparatus 1 and 13 described can be advantageously utilised in sport and in work and artistic activities to increase the articular excursion, muscular force, speed, strength, work, power, peripheral receptivity, coordination, attention, sensory acuity, performance, as well as for protection from contractions (cramps) and associated therapy and for the prevention of articular traumas.

From the above it will be evident that the apparatus 1 and 13 described, as well as being extremely simple from the constructional point of view, has material advantages in use, which, as well as presenting a high elasticity under load, returns perfectly to their undeformed position immediately they are released. Therefore it is necessary to explain the fact that with respect to known apparatus in which the diagnostic and therapeutic effectiveness is attributed to the adaptability of the occlusal portions, in the apparatus 1 and 13 described this effectiveness is given by the occlusal non adaptability in that the cushion elements return perfectly to their undeformed condition after each clamping action by the patient.

Moreover, the apparatus 1 and 13 described is maintained in its operative equilibrium position solely by the actions exerted by the jaw and tongue muscles, always causing a different occlusion in the various cases and therefore always a different receptor response.

Finally, the apparatus 1 and 13 described has extremely low manufacturing costs due to the fact that the materials utilised are readily available on the market at low cost.

From the above it will be evident that the apparatus 1 and 13 described can have modifications and variations introduced thereto which do not depart from the field of protection of the present invention. In particular, the terminal elements 2 can be different from one another and from the intermediate element 14 and could include several bodies different from one another both in shape and dimensions and, for example selectable from the different constructional shapes described. Not only this, but the cushion elements 2 and 14 can be made of different materials, and the bodies constituting the elements themselves can be defined by several parts not necessarily the same as one another in terms of shape and dimensions and material utilised.

Moreover, when the intermediate element 14 comprises several bodies, all or only some of these bodies can be defined by several identical or different portions both as

far as shape and dimensions and materials used is concerned.

Finally, the wire 4 could be replaced by an assembly of cold shapable wires disposed adjacent one another or slightly spaced from one another.

## Claims

1. Dental apparatus (1; 13) adapted to be fitted into a patient's oral cavity and comprising two terminal cushion elements (2) adapted to be clamped between the patient's teeth, and connection means for connecting the cushion elements (2) together, characterised in that each said terminal cushion element (2) is defined by an associated solid resilient body (3) delimited laterally by a pair of contact surfaces (7) which can come into contact with the patient's teeth, the said connection means comprising a wire element (4) made of cold-formable material.

2. Apparatus according to Claim 1, characterised in that it further includes an intermediate cushion element (14) extending between the said terminal cushion elements (2) and defined by at least one further resilient body (16; 19) delimited laterally by a pair of contact surfaces (18; 20) which can come into contact with at least part of the patient's incisors; the said further resilient body (16; 19) being coupled to the said wire element (4).

3. Apparatus according to Claim 2, characterised in that the said further resilient body (16; 19) is coupled to the said wire element (4) in a releasable manner.

4. Apparatus according to Claim 2 or Claim 3, characterised in that the said intermediate cushion element 14 comprises at least two resilient bodies (19) adjacent one another and each coupled to the said wire element (4), each of the said resilient bodies (19) of the said intermediate cushion element (14) being delimited laterally by two respective said contact surfaces (20).

5. Apparatus according to Claim 4, characterised in that all the said resilient bodies (3, 16, 19) are made of elastomeric material.

6. Apparatus according to Claim 4, characterised in that all the said resilient bodies (3, 16, 19) are made of thermoplastic resin.

7. Apparatus according to Claim 4, characterised in that all the said resilient bodies (3, 16, 19) are made of thermosetting resin.

8. Apparatus according to Claim 4, characterised in that each said resilient body (3, 16, 19) comprises at least two portions (10) connected together.

9. Apparatus according to Claim 8, characterised in that at least one of the said portions (10) is made at least in part of elastomeric material.

10. Apparatus according to any of Claims from 4 to 9, characterised in that at least one of the resilient bodies (3, 16, 19) constituting the said terminal cushion elements (2) and the said intermediate cushion element (14) include an elastic plate (9, 11) embedded in the resilient body (3, 16, 19).

11. Apparatus according to any of claims from 4 to 10, characterised in that the contact surfaces (7, 18, 20) of each said resilient body (3, 16, 19) are flat surfaces substantially parallel to one another.

12. Apparatus according to any of Claims from 4 to 10, characterised in that the said contact surfaces (7, 18, 20) of each said resilient body (3, 16, 19) are substantially flat surfaces and form a non-zero angle (A,B,C) with respect to one another.

13. Apparatus according to any of Claims from 4 to 10, characterised in that at least one of the said contact surfaces (7, 18, 20) of each resilient body (3, 16, 19) is a curved surface.

14. Apparatus according to any of Claims from 4 to 13 characterised in that at least one of the said contact surfaces (7, 18, 20) of each resilient body (3, 16, 19) is a grooved surface.

15. Apparatus according to any of Claims from 4 to 13, characterised in that at least one of the said contact surfaces (7, 18, 20) of each resilient body (3, 16, 19) is a milled surface.

16. Apparatus according to any preceding claim, characterised in that the said wire element comprises a single cold-formable wire (4).

17. Apparatus according to Claim 16, characterised in that the said wire (4) is a metal wire.

## Patentansprüche

1. Zahnärztliche Vorrichtung (1; 13), die dafür vorgesehen ist, in die Mundhöhle eines Patienten eingesetzt zu werden, und die zwei terminale Kissenelemente (2), welche dafür vorgesehen sind, zwischen die Zähne des Patienten geklemmt zu werden, sowie Verbindungsmittel zur gegenseitigen Verbindung der Kissenelemente (2) umfaßt, dadurch gekennzeichnet, daß jedes terminale Kissenelement (2) durch einen zugehörigen festen elastischen Körper (3) definiert wird, der seitlich von einem Paar Kontaktflächen (7) begrenzt wird, die mit den Zähnen den Patienten in Kontakt kommen können; wobei die Verbindungsmittel ein Drahtelement (4) aus kaltverformbarem Material umfassen.

2. Vorrichtung nach Anspruch 1, dadurch gekennzeichnet, daß sie außerdem ein dazwischenliegendes Kissenelement (14) einschließt, das sich zwischen den terminalen Kissenelementen (2) erstreckt und durch wenigstens einen weiteren elastischen Körper (16; 17) definiert wird, der seitlich von einem Paar Kontaktflächen (18; 20) begrenzt wird, die mit wenigstens einem Teil der Schneidezähne des Patienten in Kontakt kommen können; wobei der weitere elastische Körper (16; 19) an dem Drahtelement (4) befestigt ist.

3. Vorrichtung nach Anspruch 2, dadurch gekennzeichnet, daß der weitere elastische Körper (16; 19) in einer lösbaren Weise an dem Drahtelement (4) befestigt ist.

4. Vorrichtung nach Anspruch 2 oder Anspruch 3, dadurch gekennzeichnet, daß das dazwischenliegende Kissenelement (14) wenigstens zwei elastische Körper (19) umfaßt, die nebeneinander angeordnet und jeweils an dem Drahtelement (4) befestigt sind, wobei jeder der elastischen Körper (19) des dazwischenliegenden Kissenelementes (14) seitlich von zwei jeweiligen Kontaktflächen (20) begrenzt wird.

5. Vorrichtung nach Anspruch 4, dadurch gekennzeichnet, daß alle elastischen Körper (3, 16, 19) aus elastomerem Material gefertigt sind.

6. Vorrichtung nach Anspruch 4, dadurch gekennzeichnet, daß alle elastischen Körper (3, 16, 19) aus thermoplastischem Kunststoff gefertigt sind.

7. Vorrichtung nach Anspruch 4, dadurch gekennzeichnet, daß alle elastischen Körper (3, 16, 19) aus duroplastischem Kunststoff gefertigt sind.

8. Vorrichtung nach Anspruch 4, dadurch gekennzeichnet, daß jeder elastische Körper (3, 16, 19) wenigstens zwei miteinander verbundene Teile (10) umfaßt.

9. Vorrichtung nach Anspruch 8, dadurch gekennzeichnet, daß wenigstens eines der Teile (10) zumindest teilweise aus elastomerem Material gefertigt ist.

10. Vorrichtung nach einem der Ansprüche 4 bis 9, dadurch gekennzeichnet, daß wenigstens einer der elastischen Körper (3, 16, 19), welche die terminalen Kissenelemente (2) und das dazwischenliegende Kissenelement (14) bilden, eine elastische Platte (9, 11) enthält, die in dem elastischen Körper (3, 16, 19) eingebettet ist.

11. Vorrichtung nach einem der Ansprüche 4 bis 10, dadurch gekennzeichnet, daß die Kontaktflächen (7, 18, 20) jedes elastischen Körpers (3, 16, 19) ebene Flächen sind, die im wesentlichen parallel zueinander sind.

12. Vorrichtung nach einem der Ansprüche 4 bis 10, dadurch gekennzeichnet, daß die Kontaktflächen (7, 18, 20) jedes elastischen Körpers (3, 16, 19) im wesentlichen ebene Flächen sind und in Bezug aufeinander einen von Null verschiedenen Winkel (A, B, C) bilden.

13. Vorrichtung nach einem der Ansprüche 4 bis 10, dadurch gekennzeichnet, daß wenigstens eine der Kontaktflächen (7, 18, 20) jedes elastischen Körpers (3, 16, 19) eine gekrümmte Fläche ist.

14. Vorrichtung nach einem der Ansprüche 4 bis 13, dadurch gekennzeichnet, daß wenigstens eine der Kontaktflächen (7, 18, 20) jedes elastischen Körpers (3, 16, 19) eine gerillte Fläche ist.

15. Vorrichtung nach einem der Ansprüche 4 bis 13, dadurch gekennzeichnet, daß wenigstens eine der Kontaktflächen (7, 18, 20) jedes elastischen Körpers (3, 16, 19) eine geriffelte Fläche ist.

16. Vorrichtung nach einem der vorhergehenden Ansprüche, dadurch gekennzeichnet, daß das Drahtelement einen einzigen kaltverformbaren Draht (4) umfaßt.

17. Vorrichtung nach Anspruch 16, dadurch gekennzeichnet, daß der Draht (4) ein Metalldraht ist.

## Revendications

1. Appareil dentaire (1 ; 13) conçu pour être inséré à l'intérieur de la cavité buccale d'un patient et comprenant deux éléments terminaux de coussins (2), conçus pour être immobilisés entre les dents du patient, et un moyen de liaison destiné à relier les éléments de coussins (2) ensemble, caractérisé en ce que chaque dit élément terminal de coussin (2) est défini par un corps élastique plein associé (3) délimité latéralement par une paire de surfaces de contact (7) qui peuvent venir en contact avec les dents du patient, ledit moyen de liaison comprenant un élément de fil (4) fait d'un matériau pouvant être formé à froid.

2. Appareil selon la revendication 1, caractérisé en ce qu'il comprend en outre un élément intermédiaire de coussin (14) s'étendant entre lesdits éléments terminaux de coussins (2) et défini par au moins un autre corps élastique (16 ; 19), délimité latéralement par une paire de surfaces de contact (18 ; 20) qui peut venir en contact avec au moins une partie des incisives du patient, ledit autre corps élastique (16 ; 19) étant relié audit élément de fil (4).

3. Appareil selon la revendication 2, caractérisé en ce que ledit autre corps élastique (16 ; 19) est relié audit élément de fil (4) de façon amovible.

4. Appareil selon la revendication 2 ou la revendication 3, caractérisé en ce que ledit élément intermédiaire de coussin (14) comprend au moins deux corps élastiques (19) adjacents l'un à l'autre et reliés chacun audit élément de fil (4), chacun desdits corps élastiques (19) dudit élément intermédiaire de coussin (14) étant délimité latéralement par deux dites surfaces de contact respectives (20).

5. Appareil selon la revendication 4, caractérisé en ce que tous lesdits corps élastiques (3, 16, 19) sont faits d'un matériau élastomère.

6. Appareil selon la revendication 4, caractérisé en ce que tous lesdits corps élastiques (3, 16, 19) sont faits d'une résine thermoplastique.

7. Appareil selon la revendication 4, caractérisé en ce que tous lesdits corps élastiques (3, 16, 19) sont faits d'une résine thermodurcissable.

8. Appareil selon la revendication 4, caractérisé en ce que chaque dit corps élastique (3, 16, 19) comprend au moins deux parties (10) reliées ensemble.

9. Appareil selon la revendication 8, caractérisé en ce qu'au moins l'une desdites parties (10) est faite au moins en partie de matériau élastomère.

10. Appareil selon l'une quelconque des revendications 4 à 9, caractérisé en ce qu'au moins l'un des corps élastiques (3, 16, 19) constituant lesdits éléments terminaux de coussins (2) et ledit élément intermédiaire de coussin (14) comprend une plaque élastique (9, 11) noyée dans le corps élastique (3, 16, 19).

11. Appareil selon l'une quelconque des revendications 4 à 10, caractérisé en ce que les surfaces de contact (7, 18, 20) de chaque dit corps élastique (3, 16, 19) sont des surfaces plates sensiblement parallèles l'une à l'autre.

12. Appareil selon l'une quelconque des revendications 4 à 10, caractérisé en ce que lesdites surfaces de contact (7, 18, 20) de chaque dit corps élastique (3, 16, 19) sont des surfaces sensiblement plates et forment un angle non nul (A, B, C) l'une par rapport à l'autre.

13. Appareil selon l'une quelconque des revendications 4 à 10, caractérisé en ce qu'au moins l'une desdites surfaces de contact (7, 18, 20) de chaque corps élastique (3, 16, 19) est une surface courbe.

14. Appareil selon l'une quelconque des revendications 4 à 13, caractérisé en ce qu'au moins l'une desdites surfaces de contact (7, 18, 20) de chaque corps élastique (3, 16, 19) est une surface rainurée.

15. Appareil selon l'une quelconque des revendications 4 à 13, caractérisé en ce qu'au moins l'une desdites surfaces de contact (7, 18, 20) de chaque corps élastique (3, 16, 19) est une surface moletée.

16. Appareil selon l'une quelconque des revendications précédentes, caractérisé en ce que ledit élément de fil comprend un unique fil pouvant être formé à froid (4).

17. Appareil selon la revendication 16, caractérisé en ce que ledit fil (4) est un fil métallique.
